# EUROPEAN PATENT SPECIFICATION

(11) **EP 3 297 423 B1**
(45) Date of publication and mention of the grant of the patent: **19.07.2023**
(21) Application number: 16723490.5
(22) Date of filing: 16.05.2016
(51) Int. Cl.: A01G 25/16

(54) **GARDEN WATERING CONTROLLERS**
STEUERUNG DER GARTENBEWÄSSERUNG
CONTRÔLEUR D'ARROSAGE DE JARDIN

(30) Priority: 18.05.2015 GB 201508492
(43) Date of publication of application: 28.03.2018
(60) Divisional application: 23178302.8
(73) Proprietor: Exel Industries SA, 51200 Epernay (FR)
(72) Inventor: HESTER, Mark, Acton W3 7AU (GB); BRAITHWAITE, Ross, Draycott in the Clay DE6 5BQ (GB)
(74) Representative: CSY London
(86) International application number: PCT/GB2016/051404
(87) International publication number: WO 2016/185190

(56) References cited:
- WO-A1-2004/080161
- WO-A1-2016/162085
- US-A- 5 921 280
- US-A1- 2008 058 995
- US-A1- 2008 251 602
- US-A1- 2012 215 366
- US-A1- 2013 035 774
- US-A1- 2013 110 293
- US-A1- 2013 131 874
- US-A1- 2014 039 697
- US-A1- 2015 081 112
- US-B1- 6 337 635
- Wang Ray: "Ray Wang - YouTube - VIDEOS", , 15 February 2022 (2022-02-15), XP055891619, Retrieved from the Internet: URL:https://www.youtube.com/user/Rayshobby /videos [retrieved on 2022-02-15] & Ray Wang: "OpenSprinkler Mobile Web App Video Instructions", , 15 July 2013 (2013-07-15), XP055891641, Retrieved from the Internet: URL:https://www.youtube.com/watch?v=5pYHsM ZSj6w&ab_channel=RayWang [retrieved on 2022-02-15] & Ray Wang: "Tutorial: OpenSprinkler Installation and Hardware Setup", , 19 October 2014 (2014-10-19), XP055891623, Retrieved from the Internet: URL:https://www.youtube.com/watch?v=M0nWP2 2GOE4 [retrieved on 2022-02-15] & Ray Wang: "Tutorial: How to use OpenSprinkler Firmware 2.1.0", , 22 October 2014 (2014-10-22), XP055891626, Retrieved from the Internet: URL:https://www.youtube.com/watch?v=iUrnf4 nIuY4&t=987s [retrieved on 2022-02-15]

## Description

This invention relates to garden watering controllers and garden watering controller units (also known as water computers) as well as to methods and apparatus for controlling garden watering controllers.

Garden watering controller units are used for controlling home watering arrangements such as micro-irrigation systems by turning the water supply on to allow watering at preselected times or under preselected conditions.

Typically, a garden watering controller unit is mountable on an outside tap which is left in an "on" position whereas the garden watering controller unit controls whether water is actually able to enter the garden watering arrangement via a hose connected to an outlet of the garden watering controller unit.

Some garden watering controller units offer only very simple timer based operation and may, for example, be programmable to water for 30 minutes at a time specified by an internal clock. Other units may be more complex and have a screen based programmable functionality, similar to say a central heating control, such that various "on" and "off" times may be set and these might be set to occur every day or only on certain pre-programmed days.

A difficulty with these systems is that they are complex and time consuming to programme and the user interfaces, displays and so on may be fiddly to use. Furthermore, there is no easy way to change the behaviour of the unit if the situation should change. Further, such units do not necessarily lead to watering at optimum times with reference to the different number of daylight hours as one moves through the year or in different weather conditions. A user, for example, might prefer to have watering occur at dusk every day but on a time based programmable system this would only be possible if the programmed time of watering was altered on a regular basis. Similarly, the user may wish to alter watering behaviour as weather changes but again with a time based programmable system this is only possible by altering the programmed time on a regular basis.

It would be desirable to have a garden watering controlling unit which facilitates ease of use whilst also allowing better functionality for the user.

WO 2004/080161, US 2015/0081112, US 2014/0039697, US 2013/0110293, US 2013/0131874, US 2008/0251602, US 6,337,635, US 2012/0215366, WO 2016/162085 A1, US 5 921 280 A and US 2013/035774 A1 disclose examples of irrigation controllers with some aspect of wireless and/or networked operation.

These range from WO 2004/080161 which describes a wireless remote control for use at a hose outlet end to reduce risks from having a pressurised hose when not watering to US 2015/0081112 which describes a complex system with multiple external inputs.

US 6,337,635 describes a system which allows programming and control from a remote unit and allows switching into and out of a programmed mode to a manual mode. This though requires intervention by the user to switch between modes.

WO 2016/162085 A1 describes a system including sensors disposed on a parcel of land and watering equipment disposed on the parcel and configured to selectively apply water to the parcel. However, it does not allow a temporary modification of the watering schedule for a period selected by a user.

US 5 921 280 A describes a system for controlling a plurality of irrigation valves in accordance with instructions stored in a controller, which can be overridden by signals received by the controller from a remote control unit or a rain delay input. However, it does not allow a temporary modification of the watering schedule for a period selected by a user.

US 2008/0058995 describes an irrigation control apparatus which is programable and has an immediate irrigation function.

Open sprinkler is described in Ray Wang - YouTube videos at URL https://www.youtube.com/watch ?v=5pYHsMZSj6w&ab channel=RayWang, URL https://www.youtube.com/watch?v=M0nWP22GOE4, URL https://www.youtube.com/watch?v=iUrnf4nluY4&t=987s. It is described as a wirelessly controllable sprinkler controller system which has a run once function and an automatic weather based watering adjust function.

According to a first aspect of the present invention there is provided a tap mountable garden watering controller unit according to claim 1.

These arrangements allow for the remote control of the watering controller and hence of watering. Ultimately control may be provided via a network, such as a LAN and/or the internet.

Typically the garden watering controller and controller unit will be battery powered.

Typically the valve will be an electrically operated valve, for example a motor driven valve or a solenoid valve.

The central unit is arranged to store a watering schedule received via the programming data signals and arranged to operate the valve in dependence on the stored watering schedule. This facilitates operation of the watering controller and hence the valve without the need for continual wireless communication. This can be helpful since it can help reduce battery consumption.

The controller may be arranged under the control of software to have a sleep mode in which the controller does not conduct wireless communication and a wireless communication mode in which the controller looks for programming data signals.

The controller may be arranged to enter the wireless communication mode periodically with a respective wakeup interval between each entry into the wireless communication mode.

The length of the wakeup interval may be varied in dependence on predetermined conditions.

These features are aimed at minimising battery consumption.

The length of the wakeup interval may be increased if battery life is running low. The controller may be arranged to output an indicator signal if battery life is running low. This may in turn facilitate a user choosing a longer wakeup interval. Alternatively the wakeup interval may be increased automatically.

The controller may be arranged to decrease the length of the wakeup interval in dependence on respective predetermined conditions. The respective predetermined condition may comprise situations when it is determined that changes in schedule are likely to be made by the user.

The controller may comprise a manual override control that operates the valve to allow immediate watering. The manual override control may allow selection of a defined period of watering. The manual override control may be a button. The button may be arranged so that subsequent presses of the button cause cycling through an available range of watering durations.

The controller may be arranged to decrease the length of the wakeup interval if the user manual override control is used and/or if user override control signals are received, in particular signals which cause immediate watering. This can allow prompter reaction to deactivation of a water immediately function, or further adjustments to a stored schedule, without permanently increasing battery usage.

The controller may be arranged so that the controller does not engage in wireless communication at the same time as the valve is operated. Again the aim in this is to keep drain on battery power to a minimum.

The controller may store a watering schedule which is dependent on sunrise times and/or sunset times determined in dependence on geo-location data in respect of the garden watering controller.

This can facilitate watering at dawn and/or dusk.

The tap mountable garden watering controller unit may comprise a main body which houses the valve and its respective drive, such as a motor. The garden watering controller may be detachably mountable on the main body.

According to a second aspect of the present invention there is provided a garden watering controller system according to claim 7.

The garden watering controller system may comprise a hub which is on the one hand connectable to an external network and on the other hand arranged for wireless communication with the garden watering controller.

The client device may be arranged to accept user inputs for pausing a watering schedule which is stored in the garden watering controller.

This allows temporary ceasing of watering operation without the need to change the programmed schedule.

The client device may be arranged to indicate to a user if battery life is running low at the garden watering controller.

The client device may be arranged to accept a user input for adjusting the wake up interval of the garden watering controller.

The system, client device, and/or the server may be arranged for determining geo-location data for the garden watering controller. This may be determined from the location of the hub where present. This facilitates various "smart" location based behaviour of the controller.

The geo-location data may be used in controlling operation of the garden watering controller.

The server may be arranged to determine sunrise times and/or sunset times in dependence on the geo-location data.

The client device may be arranged to accept a user input for creating a watering schedule which is dependent on sunrise times and/or sunset times determined in dependence on the geo-location data.

Thus a watering schedule which is dependent on sunrise times and/or sunset times determined in dependence on geo-location data in respect of the garden watering controller may be sent to the garden watering controller.

For example, the user may choose for watering to occur at dawn and/or dusk.

The server may be arranged to acquire weather information in dependence on the geo-location data.

The client device may be arranged to indicate to the user, current weather conditions at the location of the garden watering controller in dependence on the acquired weather information.

The server may be arranged to analyse weather conditions at the determined location of the garden water controller over time and output a weather change indication signal to the client device if predetermined conditions are met by the analysed weather conditions. A weather change indication signal may, for example, be output if the weather has become considerably drier or wetter over the last week or month.

The client device may be arranged to indicate to a user if a weather change indication signal is issued by the server. The user may then decide to increase or decrease watering by modifying or re-programming the stored schedule.

In developments, the system, client device, or server may be arranged to automatically adjust a stored watering schedule at the garden watering controller in response to a weather change indication signal.

Embodiments of the present invention will now be described, by way of example, only with reference to the accompanying drawings in which:
Figure 1 schematically shows a garden watering controller unit;
Figure 2 shows in highly schematic form, the garden watering controller unit of

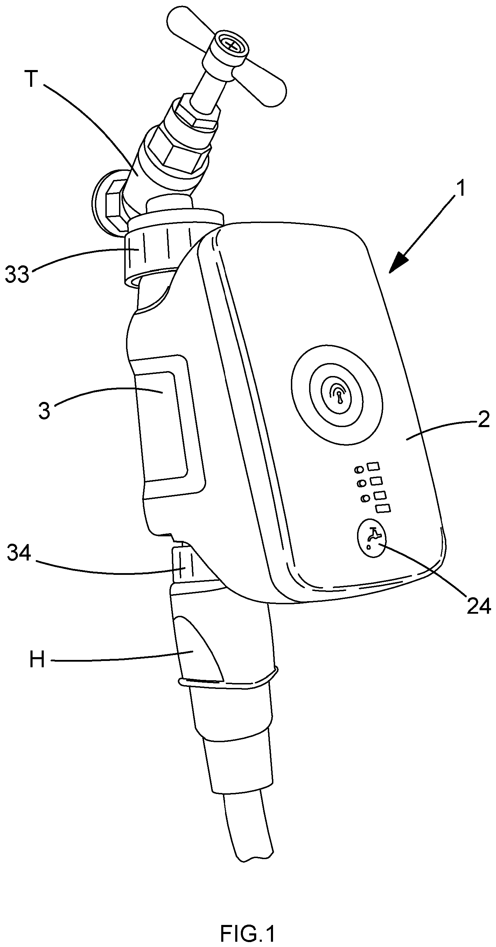

Figure 1 as part of a garden watering controller system;

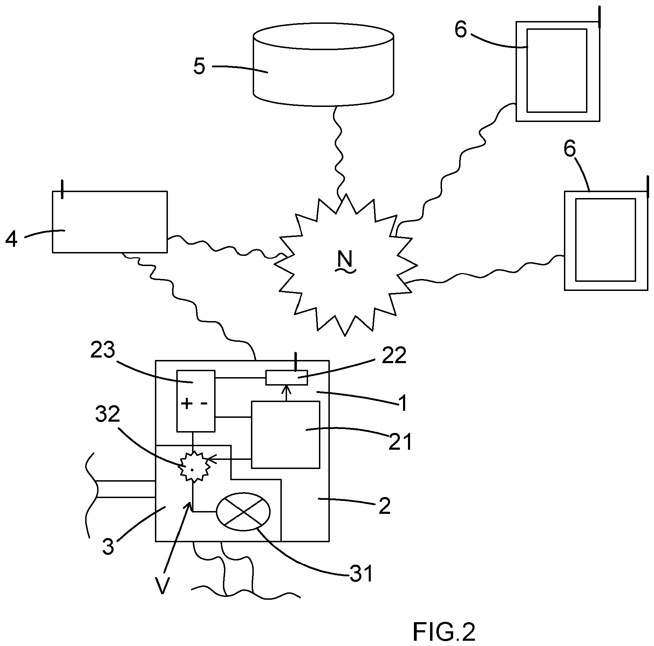

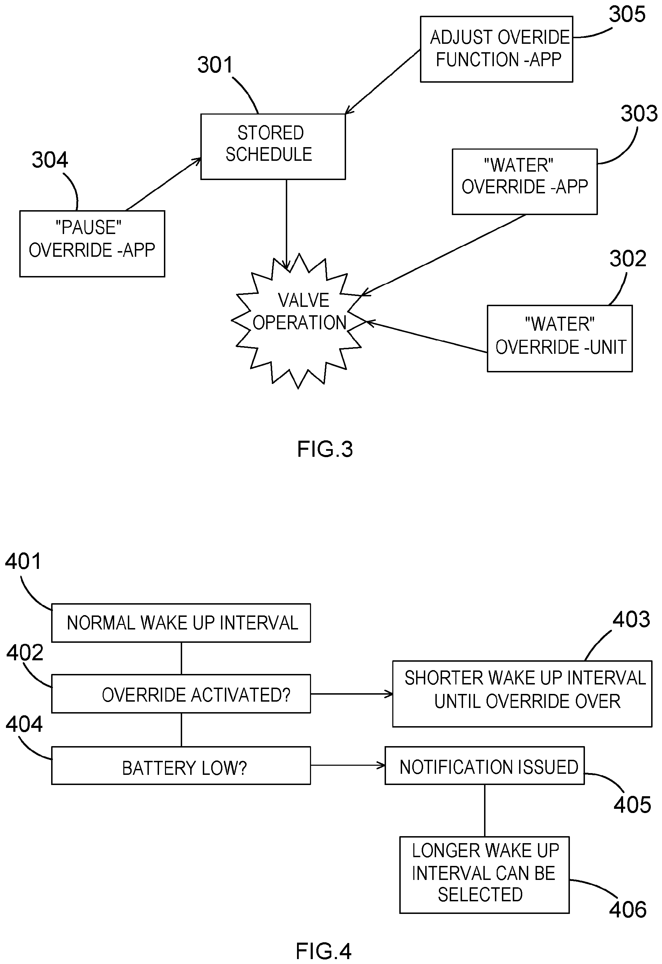

Figure 3 shows an overview of basic operation of the garden watering controller unit of Figures 1 and 2;
Figure 4 is a flowchart illustrating a process for modifying a wake up interval at the garden watering controller unit of Figures 1, 2 and 3; and

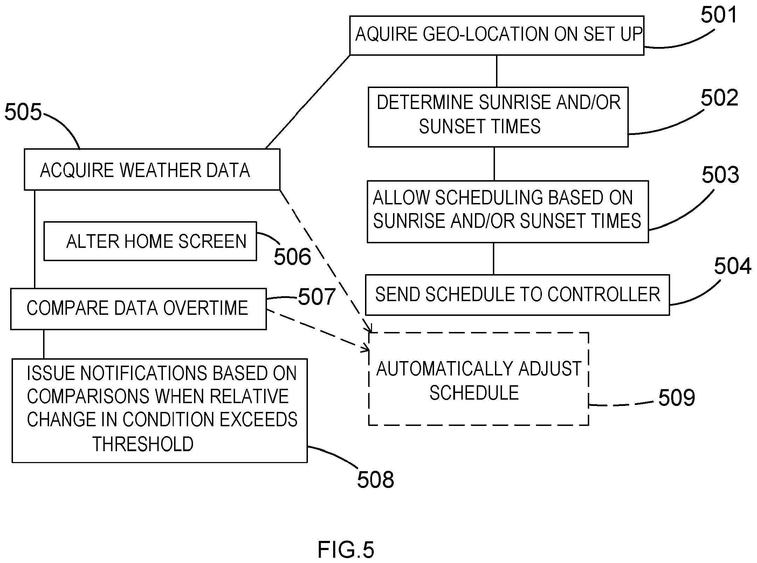

Figure 5 schematically shows overall operation of the garden watering controller system of Figure 2 making use of geo-location data.

Figure 1 shows a garden watering controller unit 1 in isolation whereas Figure 2 shows the garden watering controller unit 1 as part of a garden watering controller system. The garden watering controller unit 1 comprises a garden watering controller panel 2 mounted on a main body 3. In the present embodiment, the main body 3 houses a valve unit V comprising a valve 31 and a motor 32 for driving the valve 31. The garden watering controller unit 1 is tap mountable and is shown in Figure 1 mounted on a tap T via a connector 33 provided on the main body 3. A hose H is shown in Figure 1 connected to the main body 3 via a respective connector 34.

In terms of basic use of the garden watering controller unit 1, the tap T will be left in an "on" position and the garden watering controller unit 1 controls whether watering occurs. This is by virtue of operating the valve 31 to control whether water is delivered to the hose H and thus onwards into a respective garden watering arrangement be this a simple sprinkler, a micro-irrigation system or so on.

The garden watering control panel 2 comprises a central unit 21 comprising a micro-processor (not shown) and a memory (not shown). The central unit 21 is arranged for overall control of the garden watering controller unit 1 and storing watering schedules. The central unit 21 is connected to a wireless transceiver unit 22 for allowing wireless communication. The garden watering controller unit 1 further comprises one or more battery 23 which may be provided as part of the controller panel 2, the main body 3 or separately from each of these. In the present embodiment, the batteries 23 are carried by the controller panel 2.

Power from the batteries 23 is used for powering the central unit 21, the wireless transceiver unit 22 and the motor 32 which drives the valve 31.

Note that in other embodiments rather than a motor driven valve 31 and motor 32, a solenoid valve may be used or any other appropriate form of electronically controllable valve.

In terms of basic operation, the garden watering controller unit 1 is arranged to control whether the valve 31 is open so as to control watering in dependence on a watering schedule stored at the central unit 21.

The garden watering controller unit 1 also comprises a user operable manual override control 24. In the present embodiment this control 24 is a user operable button which may be used to cause the garden watering controller unit 1 to open the valve 31 and allow immediate watering. If the button is pressed once, watering continues for ten minutes. If the button is pressed twice then watering continues for thirty minutes. If the button is pressed three times then watering is continued for sixty minutes. If the button is pressed again watering stops.

If there is a delay between the first and subsequent presses then the additional time runs from the time of the later press. Thus, say if five minutes of watering have elapsed before the button is pressed for a second time, then that second press will cause an additional thirty minutes of watering. In this way, the manual override button 24 overrides any programmed watering schedules stored in the central unit 21.

As shown in Figure 2, the garden watering controller system comprises further components in addition to the garden watering controller 1.

In particular, a hub 4 is provided for wirelessly communicating with the garden watering controller unit 1 via the wireless transceiver unit 22. In the present embodiment this wireless communication is 868MHz two-way radio communication. This particular communication frequency and protocol has been found to be particularly effective in allowing transmission of wireless signals between the garden watering controller unit 1 and the hub 4 where these transmissions need to travel a considerable distance and likely through external walls. This is on the basis that the garden watering controller unit 1 will typically be mounted on an outside tap T as shown in Figure 1 whereas the hub 4 will normally be located inside the user's property.

The hub 4 is connected via a network N typically the internet, to a server 5 and one or more client devices 6. Each client device may be a mobile device such as a smart phone, a tablet or instead a PC device such as a desktop or a laptop computer.

Software is provided at the server 5 and at each client device 6 enabled for use with the system for allowing control of the operation of the garden watering controller 1. Thus the software at the server and the client devices 6 may be used for sending programming data signals to the garden watering controller unit 1 via the hub 4 so as to store a watering schedule in the central unit 21.

Further, another kind of programming data signals may be sent to the garden watering controlling unit 1. In particular, each client device 6 is arranged (under the control of the provided software) to allow sending of a water immediately override signal from the client device 6 (via the network N and the hub 4) to cause the garden watering controller unit 1 to water immediately in much the same way as pressing the water immediately button 24.

Similarly, each client device 6 is arranged to allow sending of a pause override signal to the garden watering controller unit 1 to pause any watering schedules stored in the central unit 21. Whilst in this pause mode, the garden watering controller unit 1 will not perform any watering. Once the pause instruction is removed by a further operation of a client device 6, the garden watering controller unit 1 will begin to follow the stored watering schedule again.

Moreover, each client device 6 is arranged to allow sending of an adjust override signal to the garden watering controller unit 1 to adjust the operation of a stored watering schedule. The adjust function allows the user to alter the duration for which watering occurs at each selected time in a stored watering schedule.

As will be appreciated, the software provided at each suitably enabled client device 6 may be an "app".

The above described operation of the system is schematically illustrated in Figure 3. Thus, in normal circumstances, operation of the valve 31 in the garden watering controller 1 is controlled by a stored watering schedule 301. However, if the water immediately button 24 is operated then this overrides the schedule and causes valve operation 302. Similarly, if the water immediately override is operated from the software provided on a client device 6 (ie the app) at step 303 then this overrides the stored schedule and causes operation of the valve 31. On the other hand if, as in step 304, the pause override control is used from a suitably programmed client device 6, this interrupts and pauses any stored schedule and so ultimately causes control of valve operation. Similarly, if the adjust override function is used 305 at a suitably programmed client device 6, this modifies the stored schedule.

The adjust override functionality discussed in reference to step 305 may be such that the suitably programmed client device 6 allows the user to specify whether a modified level of watering (ie a modified duration of watering) should occur for a specified number of days. Currently, the user may choose between the override operating for between 1 and 14 days before the schedule reverts back to the normal schedule.

Similarly, the override discussed with reference to step 304 may be set to run for a selected period between 1 and 14 days.

With a battery powered wireless device such as the garden watering controller unit 1, battery consumption is a concern. Thus, the garden watering controller panel 2 is arranged to adopt a sleep mode in normal circumstances and when in this sleep mode no wireless communication will take place. The central unit 21 has a normal wake up interval and wakes up the device to look for wireless signals periodically in accordance with this wake up interval.

In the present embodiment, the normal wake up interval is 15 minutes. Thus, in the present embodiment, the garden watering controller unit 1 wakes up every 15 minutes to see if there have been any changes to the watering schedule as currently stored in the central unit 21 and then goes back into sleep mode.

However, there are times when it is desirable to modify this wake up interval and processes in connection with this are illustrated in a flow chart shown in Figure 4.

In step 401, the garden watering controller panel 2 is a normal state with a normal wake up interval. However if, in step 402, the central unit 21 determines that an override has been activated (be this operation of the water immediately button 24 or one of the client device 6 based overrides) then the wake up interval is decreased in step 403 to provide a more responsive system and this state is retained until the override has been cancelled or the override period is over.

On the other hand if, in step 404, it is determined that the battery level of the battery 23 is low, then it could be desirable to use a longer wake up interval to further preserve battery power. In such a case in the present embodiment the system is arranged so that a notification signal is sent from the garden watering controller unit 1 to the suitably programmed client device 6 to indicate that the battery level is low at step 405. In response to this the user using the client device 6 may send a signal back to the garden watering controller unit 1 to specify a longer wake up interval.

In future developments/alternative embodiments then a longer wake up interval can be automatically selected in response to determination that the battery level is low.

As a further measure to help minimise drain on the battery, the central unit 21 is arranged so that when the battery 23 is being used to power the wireless transceiver unit 22 it is not also used to operate the valve (ie power the motor 32) and vice versa.

The garden watering controller system is also arranged to provide behaviour which is controlled in dependence on geo-location data which can be acquired in respect of the physical location of the garden watering controller unit 1. In particular, in the present embodiment the server 5 is arranged under software to acquire geo-location data from the hub 4 during a set up process. This geo-location data may then be stored in association with the garden watering controller unit 1 and used for various purposes.

Figure 5 schematically shows processes concerning geo-location data which are used by the garden watering controller system.

In step 501, geo-location data concerning the physical location of the garden watering controller unit 1 is acquired as mentioned above.

In step 502, this acquired information is used to determine sunrise and/or sunset times at the location of the garden watering controller unit 1. Then in step 503, the suitably programmed client device 6 is arranged to allow stored watering schedules to be input by a user based on sunrise and/or sunset times. Thus, the suitably programmed client device 6 allows a user to specify that watering should occur at sunrise, sunset or sunrise and sunset or to put this another way at dawn, at dusk or at dawn and dusk. Based on such inputs from the user and the determined sunrise and sunset times, a suitable watering schedule may be fed to the central unit 21 of the garden watering controller unit 1 in step 504. When this information is sent to the garden watering controller unit 1 in step 504, this may be done every day as sunrise and sunset times change or a batch of scheduling information may be provided in one go to cover operation of the garden watering controller unit 1 for a predefined period, such as a week or so on.

Once geo-location data has been acquired in step 501, the server 5 may also (or alternatively) acquire weather data in step 505 from publically available sources which represent the weather at the location of the garden watering controller unit 1. Correspondingly in step 506, an indication may be given to the user using an appropriately programmed client device 6 of this current weather. For example, the home screen displayed when using an app on the client device 6 may be altered accordingly.

Further, in step 507 the server 5 may acquire weather data over time. Here we are referring to the acquisition of actual observed weather data rather than weather forecast data. Then in step 508, the server 5 and suitably programmed client device 6 may be arranged to issue notifications to a user based on comparisons made in the data collected in step 507. Thus, notifications may be issued to the user in step 508 via the client device 6 if weather has become particularly wetter or particularly drier at the location of the garden watering controller unit 1. Thus, in a specific example, if rainfall over a week has fallen to half a level of rainfall in the previous week, a notification might be issued to a user. The user then could make a decision as to whether to increase the watering provided by the watering arrangement controlled by the garden watering controller unit 1.

Note that in an alternative, or a future development, the system may be arranged (step 509) to automatically adjust a programmed watering schedule stored at the garden watering controller unit 1 in dependence on the weather data acquired in step 505 and/or the analysis conducted in step 507.

The above description has been written in terms of there being a single garden watering controller unit 1. However it will be appreciated that a system may have plural such units 1. In such a case these may all be in communication with one hub and may be individually controllable both locally and over the network N.

## Claims

1. A tap mountable garden watering controller unit comprising a valve (31) for controlling supply of water from a tap into a garden watering arrangement, and a garden watering controller (1) for operating the valve (31), the controller comprising wireless receiver means (22) for wirelessly receiving programming data signals, and a central unit (21) for outputting control signals for operating the valve in dependence on the received programming data signals, wherein the central unit (21) is arranged to store a watering schedule received via the programming data signals and arranged to operate the valve (31) in dependence on the stored watering schedule, and the tap mountable garden watering controller unit is **characterised in that** the controller is arranged to receive user override control signals wirelessly as part of the programming data signals such as to adjust a selected duration of watering specified in the schedule for a user selected period before the controller (1) reverts to a state for operating the valve in dependence on the initially stored watering schedule, the controller being programmed to retain the programmed override until the override has been cancelled or the override is over.

2. A garden watering controller unit according to claim 1 in which the controller is arranged under the control of software to have a sleep mode in which the controller does not conduct wireless communication and a wireless communication mode in which the controller looks for programming data signals, and the controller is arranged to enter the wireless communication mode periodically with a respective wakeup interval between each entry into the wireless communication mode, wherein the length of the wakeup interval is variable in dependence on predetermined conditions.

3. A garden watering controller unit according to claim 2 in which the controller (1) is arranged to decrease the length of the wakeup interval if user override control signals are received.

4. A garden watering controller unit according to any preceding claim in which the controller (1) stores a watering schedule which is dependent on sunrise times and/or sunset times determined in dependence on geo-location data in respect of the garden watering controller.

5. A garden watering controller unit according to any one of the preceding claims in which the controller comprises a manual override control (24) that is arranged to operate the valve (31) to allow immediate watering for a user selected period before the controller (1) reverts to a state for operating the valve in dependence on the initially stored watering schedule, the controller being programmed to retain the programmed override until the override has been cancelled or the override is over.

6. A garden watering controller unit according to any preceding claim in which the controller is arranged to receive user override control signals wirelessly as part of the programming data signals such as to cause immediate watering for a user selected period before the controller (1) reverts to a state for operating the valve (31) in dependence on the initially stored watering schedule, the controller being programmed to retain the programmed override until the override has been cancelled or the override is over.

7. A garden watering controller system comprising:
a garden watering controller unit (1) as claimed in any one of claims 1 to 6;
a server (5) arranged under the control of software for communication via a network with the garden watering controller;
a client device (6) arranged under the control of software for communication via a network with the server and the garden watering controller (1) and for accepting user inputs which cause control of the garden watering controller.

8. A garden watering controller system as claimed in clam 7 in which the client device is arranged to accept user inputs for generating a watering schedule which is communicated to the garden watering controller (1) and stored therein.

9. A garden watering controller system according to claim 7 or claim 8 in which the client device is arranged to accept a user input for adjusting the wake up interval of the garden watering controller.

10. A garden watering controller system as claimed in any one of 7 to 9 in which the client device is arranged to accept a user input for creating a watering schedule which is dependent on sunrise times and/or sunset times determined in dependence on the geo-location data.

11. A garden watering controller system as claimed in any one of claims 7 to 10 in which the client device is arranged to indicate to the user, current weather conditions at the location of the garden watering controller in dependence on acquired weather information.

12. A garden watering controller system as claimed in any one of claims 7 to 11 in which the client device is arranged to indicate to a user if a weather change indication signal is issued in dependence on acquired weather information.

## Patentansprüche

1. Am Wasserhahn montierbare Gartenbewässerungssteuerungseinheit, umfassend ein Ventil (31) zum Steuern der Zufuhr von Wasser von einem Wasserhahn in eine Gartenbewässerungseinrichtung und eine Gartenbewässerungssteuerung (1) zum Betätigen des Ventils (31), wobei die Steuerung drahtlose Empfangsmittel (22) zum drahtlosen Empfangen von Programmierdatensignalen und eine zentrale Einheit (21) zum Ausgeben von Steuerungssignalen zum Betätigen des Ventils in Abhängigkeit von den empfangenen Programmierdatensignalen umfasst, wobei die zentrale Einheit (21) eingerichtet ist, einen über die Programmierdatensignale empfangenen Bewässerungsplan zu speichern, und eingerichtet ist, das Ventil (31) in Abhängigkeit von dem gespeicherten Bewässerungsplan zu betätigen, und die am Wasserhahn montierbare Gartenbewässerungssteuerungseinheit **dadurch gekennzeichnet ist, dass** die Steuerung eingerichtet ist, Vorrangsteuerungssignale des Nutzers drahtlos als Teil der Programmierdatensignale zu empfangen, um eine in dem Plan spezifizierte ausgewählte Dauer der Bewässerung für eine vom Benutzer ausgewählte Zeitspanne anzupassen, bevor die Steuerung (1) zu einem Zustand zum Betätigen des Ventils in Abhängigkeit von dem ursprünglich gespeicherten Bewässerungsplan zurückkehrt, wobei die Steuerung programmiert ist, den programmierten Vorrang zu behalten, bis der Vorrang aufgehoben wird oder der Vorrang vorüber ist.

2. Gartenbewässerungssteuerungseinheit nach Anspruch 1, wobei die Steuerung unter der Steuerung von Software eingerichtet ist, einen Ruhemodus, in dem die Steuerung keine drahtlose Kommunikation durchführt, und einen Modus drahtloser Kommunikation, in dem die Steuerung nach Programmierdatensignalen sucht, aufzuweisen und die Steuerung eingerichtet ist, periodisch in den Modus drahtloser Kommunikation einzutreten, mit einem jeweiligen Aktivierungsintervall zwischen jedem Eintritt in den Modus drahtloser Kommunikation, wobei die Länge des Aktivierungsintervalls in Abhängigkeit von vorgegebenen Bedingungen variabel ist.

3. Gartenbewässerungssteuerungseinheit nach Anspruch 2, wobei die Steuerung (1) eingerichtet ist, die Länge des Aktivierungsintervalls zu verringern, wenn Vorrangsteuerungssignale des Nutzers empfangen werden.

4. Gartenbewässerungssteuerungseinheit nach einem der vorhergehenden Ansprüche, wobei die Steuerung (1) einen Bewässerungsplan speichert, der von Sonnenaufgangszeiten und/oder Sonnenuntergangszeiten abhängig ist, die in Abhängigkeit von geografischen Standortdaten bezüglich der Gartenbewässerungssteuerung bestimmt werden.

5. Gartenbewässerungssteuerungseinheit nach einem der vorhergehenden Ansprüche, wobei die Steuerung eine manuelle Vorrangsteuerung (24) umfasst, die eingerichtet ist, das Ventil (31) zu betätigen, um eine sofortige Bewässerung für eine vom Nutzer ausgewählte Zeitspanne zu gestatten, bevor die Steuerung (1) zu einem Zustand zum Betätigen des Ventils in Abhängigkeit von dem ursprünglich gespeicherten Bewässerungsplan zurückkehrt, wobei die Steuerung programmiert ist, den programmierten Vorrang zu behalten, bis der Vorrang aufgehoben wird oder der Vorrang vorüber ist.

6. Gartenbewässerungssteuerungseinheit nach einem der vorhergehenden Ansprüche, wobei die Steuerung eingerichtet ist, Vorrangsteuerungssignale des Nutzers drahtlos als Teil der Programmierdatensignale zu empfangen, um eine sofortige Bewässerung für eine vom Nutzer ausgewählte Zeitspanne zu veranlassen, bevor die Steuerung (1) zu einem Zustand zum Betätigen des Ventils (31) in Abhängigkeit von dem ursprünglich gespeicherten Bewässerungsplan zurückkehrt, wobei die Steuerung programmiert ist, den programmierten Vorrang zu behalten, bis der Vorrang aufgehoben wird oder der Vorrang vorüber ist.

7. Gartenbewässerungssteuerungssystem, umfassend:
eine Gartenbewässerungssteuerungseinheit (1) nach einem der Ansprüche 1 bis 6;
einen Server (5), der unter der Steuerung von Software zur Kommunikation mit der Gartenbewässerungssteuerung über ein Netzwerk eingerichtet ist;
eine Client-Vorrichtung (6), die unter der Steuerung von Software zur Kommunikation mit dem Server und der Gartenbewässerungssteuerung (1) über ein Netzwerk und zum Annehmen von Nutzereingaben, die die Steuerung der Gartenbewässerungssteuerung veranlassen, eingerichtet ist.

8. Gartenbewässerungssteuerungssystem nach Anspruch 7, wobei die Client-Vorrichtung eingerichtet ist, Nutzereingaben zum Erzeugen eines Bewässerungsplans anzunehmen, der an die Gartenbewässerungssteuerung (1) kommuniziert und darin gespeichert wird.

9. Gartenbewässerungssteuerungssystem nach Anspruch 7 oder Anspruch 8, wobei die Client-Vorrichtung eingerichtet ist, eine Nutzereingabe zum Anpassen des Aktivierungsintervalls der Gartenbewässerungssteuerung anzunehmen.

10. Gartenbewässerungssteuerungssystem nach einem der Ansprüche 7 bis 9, wobei die Client-Vorrichtung eingerichtet ist, eine Nutzereingabe zum Erstellen eines Bewässerungsplans anzunehmen, der von Sonnenaufgangszeiten und/oder Sonnenuntergangszeiten abhängig ist, die in Abhängigkeit von den geografischen Standortdaten bestimmt werden.

11. Gartenbewässerungssteuerungssystem nach einem der Ansprüche 7 bis 10, wobei die Client-Vorrichtung eingerichtet ist, dem Nutzer gegenüber in Abhängigkeit von erlangten Witterungsinformationen aktuelle Witterungsbedingungen am Standort der Gartenbewässerungssteuerung anzugeben.

12. Gartenbewässerungssteuerungssystem nach einem der Ansprüche 7 bis 11, wobei die Client-Vorrichtung eingerichtet ist, einem Nutzer gegenüber anzugeben, wenn in Abhängigkeit von erlangten Witterungsinformationen ein Witterungsänderungs-Angabesignal ausgegeben wird.

## Revendications

1. Unité formant dispositif de commande d'arrosage de jardin en mesure d'être montée sur un robinet comportant une vanne (31) servant à commander la fourniture d'eau en provenance d'un robinet jusque dans un agencement d'arrosage de jardin, et un dispositif de commande d'arrosage de jardin (1) servant à faire fonctionner la vanne (31), le dispositif de commande comportant un moyen de réception sans fil (22) servant à recevoir sans fil des signaux de données de programmation, et une unité centrale (21) servant à émettre en sortie des signaux de commande à des fins de fonctionnement de la vanne en fonction des signaux de données de programmation reçus, dans laquelle l'unité centrale (21) est agencée pour mettre en mémoire un programme d'arrosage reçu par le biais des signaux de données de programmation et est agencée pour faire fonctionner la vanne (31) en fonction du programme d'arrosage mis en mémoire, et l'unité formant dispositif de commande d'arrosage de jardin en mesure d'être montée sur un robinet est **caractérisée en ce que** le dispositif de commande est agencé pour recevoir des signaux de commande d'intervention de l'utilisateur sans fil comme faisant partir des signaux de données de programmation de manière à régler une durée sélectionnée d'arrosage qui est spécifiée dans le programme en fonction d'une durée sélectionnée par l'utilisateur avant que le dispositif de commande (1) ne repasse sur un état de fonctionnement de la vanne en fonction du programme d'arrosage initialement mis en mémoire, le dispositif de commande étant programmé pour retenir l'intervention programmée jusqu'à ce que l'intervention soit annulée ou que l'intervention soit terminée.

2. Unité formant dispositif de commande d'arrosage de jardin selon la revendication 1, dans laquelle le dispositif de commande est agencé sous le contrôle d'un logiciel pour avoir un mode de veille dans lequel le dispositif de commande n'effectue pas de communication sans fil et un mode de communication sans fil dans lequel le dispositif de commande cherche des signaux de données de programmation, et le dispositif de commande est agencé pour entrer dans le mode de communication sans fil de manière périodique avec un intervalle de réveil respectif entre chaque entrée dans le mode de communication sans fil, la durée de l'intervalle de réveil étant variable en fonction de conditions prédéterminées.

3. Unité formant dispositif de commande d'arrosage de jardin selon la revendication 2, dans laquelle le dispositif de commande (1) est agencé pour diminuer la durée de l'intervalle de réveil si des signaux de commande d'intervention de l'utilisateur sont reçus.

4. Unité formant dispositif de commande d'arrosage de jardin selon l'une quelconque des revendications précédentes, dans laquelle le dispositif de commande (1) met en mémoire un programme d'arrosage qui est fonction des heures du lever du soleil et/ou des heures du coucher du soleil qui sont déterminées en fonction de données de géolocalisation se rapportant au dispositif de commande d'arrosage de jardin.

5. Unité formant dispositif de commande d'arrosage de jardin selon l'une quelconque des revendications précédentes, dans laquelle le dispositif de commande comporte une commande d'intervention manuelle (24) qui est agencée pour faire fonctionner la vanne (31) pour permettre un arrosage immédiat pendant une durée sélectionnée par l'utilisateur avant que le dispositif de commande (1) ne repasse sur un état de fonctionnement de la vanne en fonction du programme d'arrosage initialement mis en mémoire, le dispositif de commande étant programmé pour retenir l'intervention programmée jusqu'à ce que l'intervention soit annulée ou que l'intervention soit terminée.

6. Unité formant dispositif de commande d'arrosage de jardin selon l'une quelconque des revendications précédentes, dans laquelle le dispositif de commande est agencé pour recevoir des signaux de commande d'intervention de l'utilisateur sans fil comme faisant partir des signaux de données de programmation de manière à provoquer un arrosage immédiat pendant une durée sélectionnée par l'utilisateur avant que le dispositif de commande (1) ne repasse sur un état de fonctionnement de la vanne (31) en fonction du programme d'arrosage initialement mis en mémoire, le dispositif de commande étant programmé pour retenir l'intervention programmée jusqu'à ce que l'intervention soit annulée ou que l'intervention soit terminée.

7. Système de dispositif de commande d'arrosage de jardin comportant :
une unité formant dispositif de commande d'arrosage de jardin (1) selon l'une quelconque des revendications 1 à 6 ;
un serveur (5) agencé sous le contrôle d'un logiciel à des fins de communication par le biais d'un réseau avec le dispositif de commande d'arrosage de jardin ;
un dispositif client (6) agencé sous le contrôle d'un logiciel à des fins de communication par le biais d'un réseau avec le serveur et le dispositif de commande d'arrosage de jardin (1) et servant à accepter des entrées d'utilisateur qui donnent lieu à la commande du dispositif de commande d'arrosage de jardin.

8. Système de dispositif de commande d'arrosage de jardin selon la revendication 7, dans lequel le dispositif client est agencé pour accepter des entrées d'utilisateur à des fins de génération d'un programme d'arrosage qui est communiqué au dispositif de commande d'arrosage de jardin (1) et mis en mémoire dans celui-ci.

9. Système de dispositif de commande d'arrosage de jardin selon la revendication 7 ou la revendication 8, dans lequel le dispositif client est agencé pour accepter une entrée d'utilisateur à des fins de réglage de l'intervalle de réveil du dispositif de commande d'arrosage de jardin.

10. Système de dispositif de commande d'arrosage de jardin selon l'une quelconque des revendications 7 à 9, dans lequel le dispositif client est agencé pour accepter une entrée d'utilisateur à des fins de création d'un programme d'arrosage qui est fonction des heures du lever du soleil et/ou des heures du coucher du soleil qui sont déterminées en fonction des données de géolocalisation.

11. Système de dispositif de commande d'arrosage de jardin selon l'une quelconque des revendications 7 à 10, dans lequel le dispositif client est agencé pour indiquer à l'utilisateur les conditions météorologiques actuelles au niveau de l'emplacement du dispositif de commande d'arrosage de jardin en fonction des informations météorologiques acquises.

12. Système de dispositif de commande d'arrosage de jardin selon l'une quelconque des revendications 7 à 11, dans lequel le dispositif client est agencé pour indiquer à un utilisateur si un signal d'indication de changement météorologique est émis en fonction des informations météorologiques acquises.
